# EUROPÄISCHE PATENTSCHRIFT

(11) **EP 3 612 407 B1**
(45) Veröffentlichungstag und Bekanntmachung des Hinweises auf die Patenterteilung: **23.06.2021**
(21) Anmeldenummer: 18717038.6
(22) Anmeldetag: 10.04.2018
(51) Int. Cl.: B60L 53/16, B60L 50/60

(54) **LADESTECKER FÜR EIN KRAFTFAHRZEUG UND LASTKONTAKTMODUL FÜR EINEN LADESTECKER**
CHARGING PLUG FOR A MOTOR VEHICLE, AND LOAD CONTACT MODULE FOR A CHARGING PLUG
PRISE DE CHARGE POUR UN VÉHICULE AUTOMOBILE ET MODULE DE CONTACT DE CHARGE POUR UNE PRISE DE CHARGE

(30) Priorität: 21.04.2017 DE 102017108526
(43) Veröffentlichungstag der Anmeldung: 26.02.2020
(73) Patentinhaber: Phoenix Contact e-Mobility GmbH, 32816 Schieder-Schwalenberg (DE)
(72) Erfinder: MOSEKE, Dirk, 37671 Höxter-Lüchtringen (DE)
(74) Vertreter: Richly & Ritschel Patentanwälte PartG mbB
(86) Internationale Anmeldenummer: PCT/EP2018/059181
(87) Internationale Veröffentlichungsnummer: WO 2018/192805

(56) Entgegenhaltungen:
- EP-A1- 2 942 840
- WO-A1-2015/084106
- DE-A1-102013 110 798
- DE-A1-102014 111 185
- US-A1- 2015 251 551

## Beschreibung

Die vorliegende Erfindung betrifft einen Ladestecker für ein Kraftfahrzeug.

Ein Ladestecker für ein Kraftfahrzeug dient dazu, Elektro- oder Hybridfahrzeuge zum Aufladen ihrer Batterie mit einer Ladestation zu koppeln. Zum Laden eines Fahrzeugs wird der mit einer Ladestation verbundene Ladestecker in eine entsprechende Ladedose des Fahrzeugs gesteckt. Derartige Ladestecker und Ladedosen, d.h. insbesondere die Anschlussgeometrie und Leiterquerschnitte der Steckverbindung, sind genormt.

Es besteht die ständige Forderung danach, die möglichen Ladeleistungen, die über diese genormten Verbindungen übertragbar sind, weiter zu erhöhen. Hohe Ladeleistungen können dazu führen, dass ein Ladestecker oder eine Ladedose durch ein Überhitzen im Bereich der Steckverbindung beschädigt werden.

Um Ladestecker vor dem Überhitzen zu schützen, sind aktive Kühlsysteme bekannt, die den Ladestecker kühlen. Auch hier ist jedoch nicht auszuschließen, dass ein Ladestecker während der Übertragung hoher Ladeleistungen insbesondere im Bereich der Lastkontakte überhitzt und beschädigt wird.

Die US 2015/251551 A1 beschreibt ein Wandsteckersystem für ein Elektrofahrzeug. Das Wandsteckersystem weist einen lösbar an einem Basisteil eines Ladesteckers gehaltenen Adapter auf, der mit einem Temperatursensor 825 ausgestattet sein kann.

Vor diesem Hintergrund liegt der Erfindung die technische Problemstellung zugrunde, einen Ladestecker für ein Kraftfahrzeug und ein Lastkontaktmodul für einen Ladestecker anzugeben, welche die voranstehend beschriebenen Nachteile nicht oder zumindest in geringerem Maße aufweisen, und insbesondere einen Schutz vor einer Beschädigung während der Übertragung hoher Ladeleistungen bietet.

Die voranstehend beschriebene, technische Problemstellung wird gelöst durch einen Ladestecker nach Anspruch 1 und ein Lastkontaktmodul nach Anspruch 10 . Weitere Ausgestaltungen der Erfindung ergeben sich aus den abhängigen Ansprüchen und der nachstehenden Beschreibung.

Gemäß einem ersten Aspekt betrifft die Erfindung einen Ladestecker für ein Kraftfahrzeug, mit einem Anschlussmodul und mit einem Lastkontaktmodul, wobei das Anschlussmodul mit Versorgungsleitungen zur Leistungsversorgung verbindbar ist, wobei das Lastkontaktmodul einen Lastkontakt zur Übertragung einer Ladeleistung aufweist und wobei das Lastkontaktmodul lösbar und austauschbar an dem Anschlussmodul befestigt ist. Das Lastkontaktmodul weist einen Temperatursensor auf. Während eines Ladevorgangs kann die Temperatur im Bereich des Lastkontaktmoduls mithilfe des Temperatursensors gemessen werden. Sofern ein Überhitzen des Ladesteckers vorliegt oder bevorsteht, kann der Ladevorgang abgebrochen oder zeitweise unterbrochen werden. Beispielsweise kann der Ladevorgang abgebrochen oder unterbrochen werden, sobald eine vorgegebene Schwelltemperatur erreicht oder überschritten wird. Hierdurch können eine Beschädigung des Ladesteckers und/oder einer mit dem Ladestecker verbundenen Dose vermieden werden.

Der Temperatursensor ist dazu eingerichtet, die Temperatur im Bereich des Lastkontaktmoduls zu messen. Insbesondere ist der Temperatursensor dazu eingerichtet, die Temperatur des Lastkontakts zu messen. So kann die Temperatur des Lastkontakts mit dem Temperatursensor überwacht werden.

Der Temperatursensor kann über ein Material mit hoher Wärmeleitfähigkeit mit dem Lastkontakt verbunden sein. Insbesondere kann der Temperatursensor über ein Metallbauteil mit dem Lastkontakt verbunden sein.

Eine Temperatur des Lastkontakts kann vor und/oder während und/oder nach einem Ladevorgang von dem Temperatursensor gemessen und an eine Steuerung einer Ladestation weitergegeben werden.

Dadurch, dass der Temperatursensor Teil des Lastkontaktmoduls ist, kann der Temperatursensor in einfacher Weise zusammen mit dem Lastkontakt, der einem Verschleiß unterliegt, ausgetauscht werden, indem das Lastkontaktmodul ausgetauscht wird. So kann sichergestellt werden, dass stets eine zuverlässige Temperaturüberwachung mit einem funktionstüchtigen Temperatursensor erfolgt. Ist beispielsweise nach einem Überhitzen des Ladesteckers oder aufgrund der Wartungsvorgaben ein Lastkontakt des Ladesteckers auszutauschen, wird gleichzeitig auch der Temperatursensor ausgetauscht.

Der Ladestecker kann zwei oder mehr Lastkontaktmodule haben. Jedes Lastkontaktmodul kann einen Temperatursensor aufweisen, insbesondere einen einzelnen Temperatursensor aufweisen. Ein Lastkontaktmodul kann zwei oder mehr Tempertatursensoren aufweisen, um Redundanzen zu schaffen.

Das Anschlussmodul kann in einem Ladesteckergehäuse sitzen bzw. in einem Innenraum des Ladesteckergehäuses aufgenommen sein. Das Ladesteckergehäuse kann zumindest teilweise aus einem Kunststoff gefertigt sein. Das Ladesteckergehäuse kann einen Griff zur Handhabung des Ladesteckers durch einen Bediener haben. Das Ladesteckergehäuse kann eine Anschlussöffnung zum Zuführen von Leitungen in einen Innenraum des Ladesteckergehäuses haben.

Nach einer weiteren Ausgestaltung des Ladesteckers ist vorgesehen, dass der Temperatursensor zumindest abschnittsweise von einem Gehäuse des Lastkontaktmoduls umgeben ist. So kann der Temperatursensor vor einer Beschädigung geschützt werden. Insbesondere kann der Temperatursensor vollständig von dem Gehäuse eingefasst sein bzw. in einem Innenraum des Gehäuses aufgenommen sein.

Der Temperatursensor kann integraler Bestandteil des Lastkontaktmoduls sein.

Der Temperatursensor kann insbesondere einstückig in das Lastkontaktmodul intergiert sein, d.h. nicht zerstörungsfrei lösbar in das Lastkontaktmodul intergiert sein.

Gemäß einer weiteren Ausgestaltung des Ladesteckers ist vorgesehen, dass der Lastkontakt eine Öffnung zur Aufnahme eines Kontaktpins hat, wobei der Temperatursensor einen Abstand zu der Öffnung aufweist. Der Temperatursensor kann damit in eine bestehende Konstruktion eines Ladesteckers eingebunden werden, ohne den Kontaktbereich zwischen einem Lastkontakt und einem Kontaktpin zu verändern.

Der Lastkontakt kann beispielsweise im Wesentlichen hülsenförmig sein und eine im Wesentlichen kreiszylindrische, axial erstreckte Öffnung zur Aufnahme eines Kontaktpins haben. Der Temperatursensor einen radialen Abstand zu der axial erstreckten kreiszylindrischen Öffnung aufweisen.

Erfindungsgemäß ist der Lastkontakt in einem axial erstreckten Gehäuseabschnitt eines Gehäuses des Lastkontaktmoduls aufgenommen und der Temperatursensor ist in einem von dem axial erstreckten Gehäuseabschnitt auskragenden, radial erstreckten Gehäuseabschnitt eines Gehäuses des Lastkontaktmoduls aufgenommen. So kann der Temperatursensor kompakt in das Lastkontaktmodul integriert sein.

Nach einer weiteren Ausgestaltung des Ladesteckers ist vorgehen, dass der Temperatursensor auf einer Platine sitzt, wobei die Platine ein Kontaktelement zur Verbindung des Temperatursensors mit dem Anschlussmodul aufweist. Die Platine kann eine Halterung zur Positionierung des Temperatursensors in dem Gehäuse bilden. Die Platine kann zur Wärmeleitung von dem Lastkontakt zu dem Temperatursensor dienen, wobei die Platine unmittelbar mit dem Lastkontakt verbunden sein kann oder mittelbar mit dem Lastkontakt verbunden sein kann, z.B. über ein Zwischenelement, wie eine Feder oder dergleichen.

Es kann vorgesehen sein, dass der Temperatursensor und/oder die Platine von einer Vergussmasse bedeckt sind, wobei die Vergussmasse den Temperatursensor und/oder die Platine gegenüber einer Umgebung abgrenzt. So kann beispielsweise vorgesehen sein, dass die Vergussmasse eine Öffnung in einem Gehäuse des Lastkontaktmoduls verschließt bzw. versiegelt, um den Temperatursensor und/oder die Platine vollständig einzukapseln und vor Umgebungseinflüssen zu schützen.

Über das Kontaktelement und das Anschlussmodul kann der Temperatursensor mit einer Mess- und/oder Steuereinrichtung koppelbar sein.

Der Temperatursensor kann ein Widerstandsthermometer und/oder ein Thermoelement aufweisen. So kann eine Temperatur im Bereich des Lastkontaktmoduls kostengünstig und zuverlässig erfasst werden.

Es kann vorgesehen sein, dass das Kontaktelement ein Steckverbinder ist, der mit einem oder mehreren Kontakten in einer oder mehreren komplementär geformten Aufnahmen des Anschlussmoduls sitzt. Damit kann ein zügiger Austausch des Lastkontaktmoduls ermöglicht werden.

Das Kontaktelement und/oder die Platine können federnd elastisch gegen das Anschlussmodul verspannbar angeordnet sein. So kann eine zuverlässige Kontaktierung zu dem Anschlussmodul erreicht werden.

Nach einer weiteren Ausgestaltung des Ladesteckers ist vorgesehen, dass die Platine über eine Blattfeder mit dem Lastkontakt verbunden ist. So kann eine kostengünstige und zuverlässige federnd elastische Verspannung insbesondere zwischen dem Kontaktelement und dem Anschlussmodul erreicht werden. Es können zwei oder mehr Federn, insbesondere zwei oder mehr Blattfedern, vorgesehen sein, um die Platine mit dem Lastkontaktmodul zu verbinden.

Die Blattfeder kann mit einem oder mehreren Federarmen an der Platine gehalten sein, die in eine oder mehrere Aufnahmen der Platine eingreifen. Ein radialer Abstand zwischen einer Aufnahme und dem Temperatursensor kann 5 mm oder mehr betragen.

Es kann vorgesehen sein, dass das Kontaktelement zwei oder mehr Kontakte hat, insbesondere genau zwei Kontakte hat, die als axial auskragende Profile ausgeführt sind. Die Profile können insbesondere in komplementär geformte Ausnehmungen des Anschlussmoduls sitzen. Die Profile können bei der Montage des Lastkontaktmoduls zusammen mit den Ausnehmungen als Führung zur lagerichtigen Montage des Lastkontaktmoduls an dem Anschlussmodul dienen. Es können drei oder mehr Kontakte vorgesehen sein, die insbesondere als axial auskragenden Profile ausgeführt sind.

Nach einer weiteren Ausgestaltung des Ladesteckers ist vorgesehen, dass das Lastkontaktmodul, insbesondere der Lastkontakt, mit einer Schraubenverbindung an dem Anschlussmodul befestigt ist. So kann eine zuverlässige und kostengünstige lösbare Befestigung des Lastkontaktmoduls an dem Anschlussmodul erreicht werden.

Es kann vorgesehen sein, dass in einem Ladesteckergehäuse, in dem das Anschlussmodul sitzt, eine Kühleinrichtung zur Kühlung des Ladesteckers vorgesehen ist, wobei der Temperatursensor einen Abstand zu der Kühlreinrichtung aufweist. Dadurch, dass der Temperatursensor Teil des Lastkontaktmoduls ist und einen Abstand zu der aktiven Kühleinrichtung aufweist, wird der Messwert des Temperatursensors nicht oder zumindest weniger durch die Kühleinrichtung verfälscht. So kann bei einem aktiv gekühlten Ladestecker insbesondere die Temperatur des Lastkontakts des Lastkontaktmoduls zuverlässig erfasst werden.

Das Lastkontaktmodul kann wenigstens zwei Dichtungen haben, die jeweils an dem Anschlussmodul anliegen, um einen Innenraum des Ladesteckers gegenüber einer Umgebung abzudichten. Eine erste Dichtung kann dem Lastkontakt zugeordnet sein oder an dem Lastkontakt gehalten sein. Eine zweite Dichtung kann einem Gehäuseabschnitt zugeordnet oder an einem Gehäuseabschnitt gehalten sein, der das Kontaktelement einfasst. Die Dichtungen können jeweils als umlaufenden Dichtung ausgeführt sein. Wenigstens eine Dichtung kann ein O-Ring sein.

Gemäß einem zweiten Aspekt betrifft die Erfindung ein Lastkontaktmodul für einen Ladestecker, mit einem Lastkontakt zur Übertragung einer Ladeleistung, wobei das Lastkontaktmodul lösbar und austauschbar mit einem Anschlussmodul des Ladesteckers verbindbar ist. Das Lastkontaktmodul hat einen Temperatursensor. Das Lastkontaktmodul kann in voranstehend beschriebener Weise mit einem Ladestecker für ein Elektrofahrzeug verbindbar sein.

Das Lastkontaktmodul kann die voranstehend bereits mit Bezug zu dem erfindungsgemäßen Ladestecker beschriebenen Merkmale aufweisen.

Der Temperatursensor des Lastkontaktmoduls kann zumindest abschnittsweise von einem Gehäuse des Lastkontaktmoduls umgeben sein.

Der Lastkontakt des Lastkontaktmoduls kann eine Öffnung zur Aufnahme eines Kontaktpins haben, wobei der Temperatursensor einen Abstand zu der Öffnung aufweist, insbesondere einen radialen Abstand zu der Öffnung aufweist.

Der Lastkontakt des Lastkontaktmoduls ist in einem axial erstreckten Gehäuseabschnitt aufgenommen und der Temperatursensor ist in einem von dem axial erstreckten Gehäuseabschnitt auskragenden, radial erstreckten Gehäuseabschnitt aufgenommen.

Der Temperatursensor des Lastkontaktmoduls kann auf einer Platine sitzen wobei die Platine ein Kontaktelement zur Verbindung des Temperatursensors mit dem Anschlussmodul aufweist.

Es kann vorgesehen sein, dass der Temperatursensor und/oder die Platine von einer Vergussmasse bedeckt sind, wobei die Vergussmasse den Temperatursensor und/oder die Platine gegenüber einer Umgebung abgrenzt. So kann beispielsweise vorgesehen sein, dass die Vergussmasse eine Öffnung in einem Gehäuse des Lastkontaktmoduls verschließt bzw. versiegelt, um den Temperatursensor und/oder die Platine vollständig einzukapseln und vor Umgebungseinflüssen zu schützen.

Das Kontaktelement des Lastkontaktmoduls kann ein Steckverbinder sein, der mit einem oder mehreren Kontakten in einer oder mehreren komplementär geformten Aufnahmen des Anschlussmoduls einsetzbar ist.

Das Kontaktelement und/oder die Platine des Lastkontaktmoduls können federnd elastisch gegen das Anschlussmodul verspannbar angeordnet sein.

Die Platine des Lastkontaktmoduls kann über eine Blattfeder mit dem Lastkontakt verbunden sein. Es können zwei oder mehr Federn, insbesondere zwei oder mehr Blattfedern, vorgesehen sein, um die Platine mit dem Lastkontaktmodul zu verbinden.

Die Blattfeder kann mit einem oder mehreren Federarmen an der Platine gehalten sein, die in eine oder mehrere Aufnahmen der Platine eingreifen. Ein radialer Abstand zwischen einer Aufnahme und dem Temperatursensor kann 5 mm oder mehr betragen. Das Kontaktelement des Lastkontaktmoduls kann zwei Kontakte haben, die als axial auskragenden Profile ausgeführt sind. Es können drei oder mehr Kontakte vorgesehen sein, die insbesondere als axial auskragenden Profile ausgeführt sind.

Das Lastkontaktmodul, insbesondere der Lastkontakt, kann mit einer Schraubenverbindung an dem Anschlussmodul befestigbar sein.

Der Temperatursensor des Lastkontaktmoduls kann in einem an dem Anschlussmodul montierten Zustand einen Abstand zu einer aktiven Kühlreinrichtung aufweisen, die in einem Ladesteckergehäuse, in dem das Anschlussmodul sitzt, vorgesehen ist. Insbesondere kann der Temperatursensor in einem an dem Anschlussmodul montierten Zustand einen axialen Abstand zu der aktiven Kühleinrichtung aufweisen.

Nachfolgend wird die Erfindung anhand einer Ausführungsbeispiele darstellenden Zeichnung näher beschrieben. Es zeigen jeweils schematisch:
- Fig. 1: einen erfindungsgemäßen Ladestecker in einer Frontansicht;
- Fig. 2: den Ladestecker aus Fig. 1 in einer Seitenansicht;
- Fig. 3: eine Explosionsdarstellung den Ladestecker aus Fig. 1 in einer perspektivischen Ansicht;
- Fig. 4: erfindungsgemäße Lastkontaktmodule des Ladesteckers aus Fig. 1 in einer perspektivischen Ansicht;
- Fig. 5: ein Lastkontaktmodul in einer perspektivischen Ansicht;
- Fig. 6: das Lastkontaktmodul aus Fig. 5 ohne Gehäuse;
- Fig. 7: das Lastkontaktmodul aus Fig. 5 in einer Rückansicht;
- Fig. 8: das Lastkontaktmodul aus Fig. 5 in einer Seitenansicht;
- Fig. 9: das Lastkontaktmodul aus Fig. 5 in einer Draufsicht;
- Fig. 10: das Lastkontaktmodul aus Fig. 5 in einer Schnittdarstellung.

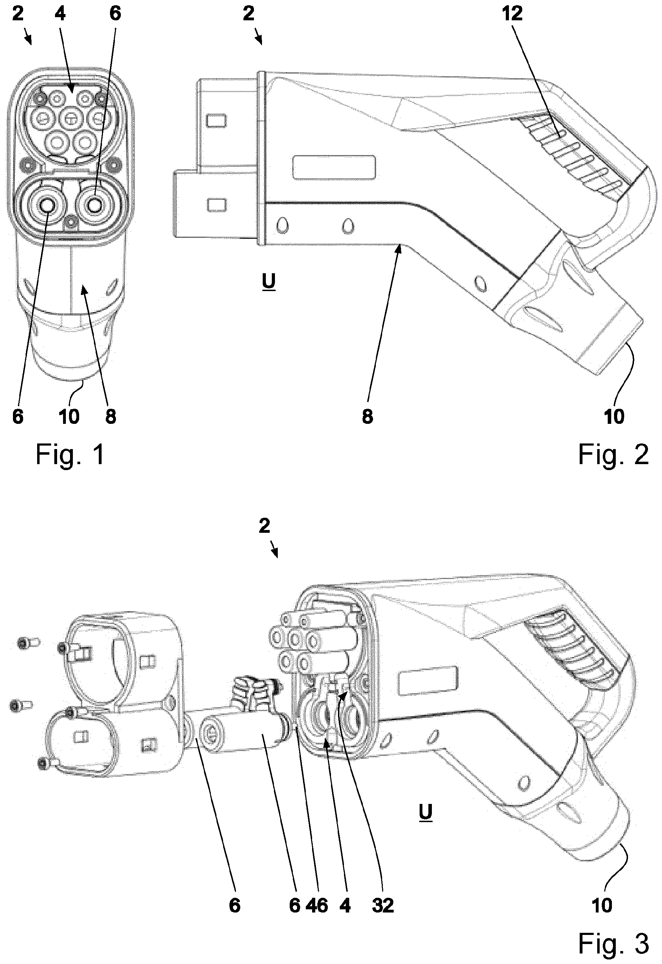

Die Figuren 1, 2 und 3 zeigen einen erfindungsgemäßen Ladestecker 2 für ein Kraftfahrzeug (nicht dargestellt). Der Ladestecker 2 hat ein Anschlussmodul 4 und zwei erfindungsgemäße Lastkontaktmodule 6. Das Anschlussmodul 4 ist mit Versorgungsleitungen (nicht dargestellt) zur Leistungsversorgung verbindbar. Derartige Versorgungsleitungen können beispielsweise mit einer öffentlichen oder privaten Ladestation verbunden sein, die zum Aufladen einer Batterie eines Elektrofahrzeugs oder eines Hybrid-Fahrzeugs eingerichtet ist.

Der Ladestecker 2 hat ein Ladesteckergehäuse 8 mit einer Anschlussöffnung 10. Die Anschlussöffnung 10 ist zum Zuführen von Leitungen bzw. Versorgungsleitungen in einen Innenraum des Ladesteckergehäuses 8 vorgesehen. Das Ladesteckergehäuse 8 ist vorliegend aus zwei Halbschalen zusammengesetzt, die aus einem Kunststoff gebildet sind. Das Ladesteckergehäuse 8 hat einen Griff 12, der zur Handhabung des Ladesteckers 2 durch einen Bediener vorgesehen ist.

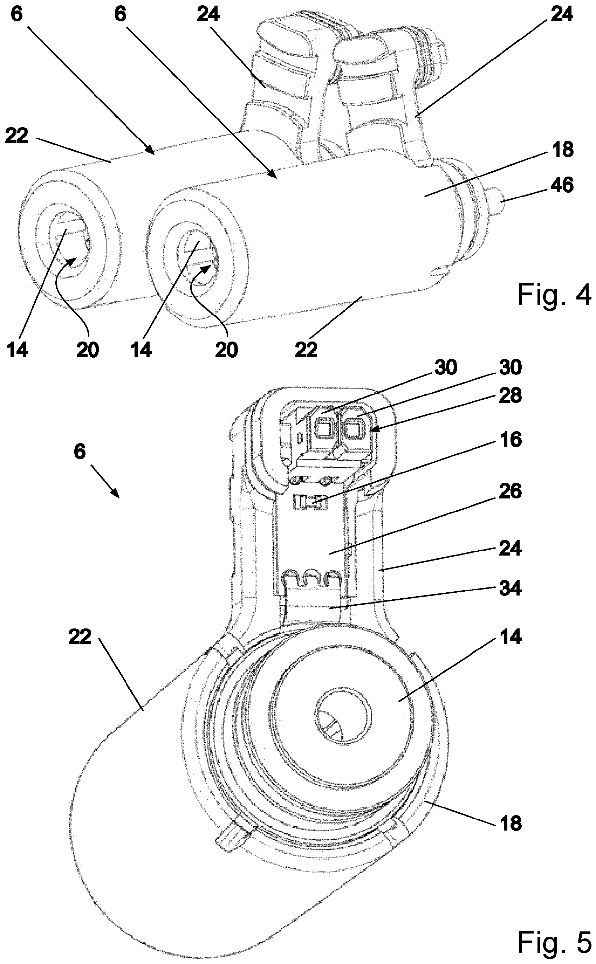

Die beiden erfindungsgemäßen Lastkontaktmodule 6 (Fig. 4) weisen die gleichen strukturellen Merkmale auf, sodass nachstehend der strukturelle Aufbau eines der Lastkontaktmodule 6 im Detail beschrieben wird (Fig. 5 - Fig. 10).

Das Lastkontaktmodul 6 hat einen Lastkontakt 14 zur Übertragung einer Ladeleistung von einer Ladestation zu einer Batterie eines Kraftfahrzeugs. Das Lastkontaktmodul 6 ist lösbar und austauschbar an dem Anschlussmodul 4 befestigt.

Das Lastkontaktmodul 6 weist einen Temperatursensor 16 auf.

Der Temperatursensor 16 ist zumindest abschnittsweise von einem Gehäuse 18 des Lastkontaktmoduls 6 umgeben. In dem Gehäuse 18 ist ebenfalls der Lastkontakt 14 aufgenommen.

Der Lastkontakt 14 hat eine Öffnung 20 zur Aufnahme eines Kontaktpins (nicht dargestellt). Ein solcher Kontaktpin ist beispielsweise an einer zu dem Ladestecker 2 komplementär geformten Ladedose eines Kraftfahrzeugs vorgesehen. Der Temperatursensor 16 weist einen radialen Abstand R1 zu der Öffnung 20 auf. Eine radiale Richtung r verläuft vorliegend quer zu einer axialen Richtung a entlang der Achse A.

Der Lastkontakt 14 ist im Wesentlichen hülsenförmig und die entlang der Achse A erstreckte Öffnung 20 hat eine im Wesentlichen kreiszylindrische Gestalt. Während eines Ladevorgangs ragt ein der Öffnung 20 zugeordneter Kontaktpin einer Ladedose in die Öffnung 20 hinein, wobei eine umfangsseitige Mantelfläche des Pins an dem Lastkontakt 14 anliegt.

Der Temperatursensor 16 weist einen radialen Abstand R2 zu der im Wesentlichen kreiszylindrischen Öffnung 20 auf.

Der Lastkontakt 14 ist in einem axial erstreckten Gehäuseabschnitt 22 des Gehäuses 18 aufgenommen. Der Temperatursensor 16 ist in einem von dem axial erstreckten Gehäuseabschnitt 22 auskragenden, radial erstreckten Gehäuseabschnitt 24 des Gehäuses 18 aufgenommen.

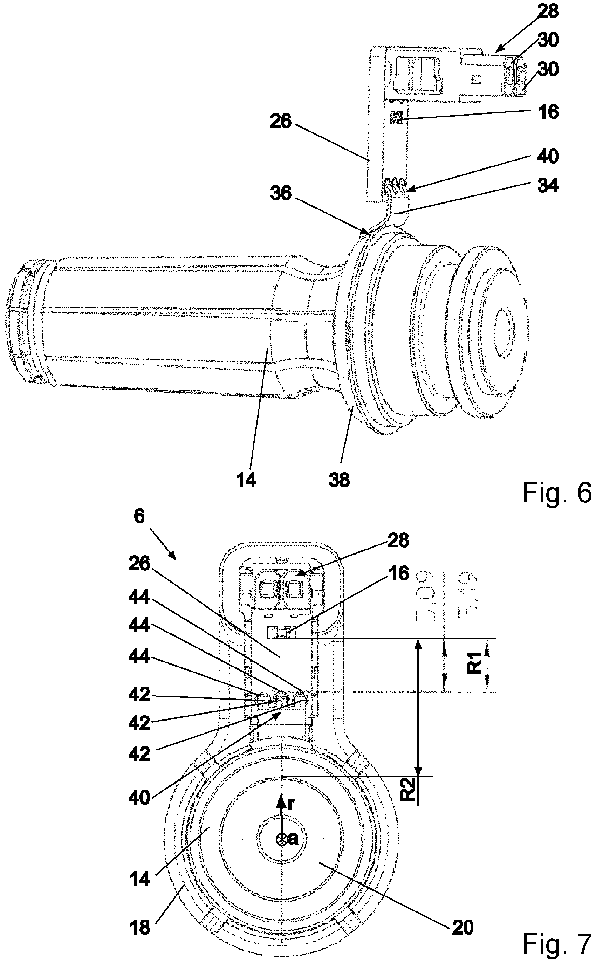

Wie den Figuren 5 und 6 zu entnehmen ist, sitzt der Temperatursensor 16 auf einer Platine 26. In Fig. 6 ist das Lastkontaktmodul 6 ohne das Gehäuse 18 dargestellt.

Die Platine 18 weist ein Kontaktelement 28 auf, dass zur Verbindung des Temperatursensors 16 mit dem Anschlussmodul 4 eingerichtet ist.

Das Kontaktelement 28 ist vorliegend ein Steckverbinder, der mit zwei Kontakten 30 in zwei komplementär geformten Aufnahmen 32 des Anschlussmoduls 4 sitzt.

Die Platine 26 ist über eine Blattfeder 34 mit dem Lastkontakt 14 verbunden. Mit einem Abschnitt 36 ist die Blattfeder 34 mit einem kreisrund umlaufenden Absatz 38 des Lastkontakts 14 verbunden. Mit einem Abschnitt 40 ist die Blattfeder 34 mit der Platine 26 verbunden. An dem Abschnitt 40 der Blattfeder 34 sind drei separate Haltearme 42 vorgesehen die in Aufnahmen 44 der Platine 26 eingreifen.

Wie Fig. 7 zu entnehmen ist, beträgt der radiale Abstand R1 zwischen den Aufnahmen 44 und dem Temperatursensor 16 mindestens 5 mm.

Mithilfe der Blattfeder 34 ist das Kontaktelement 28 federnd elastisch gegen das Anschlussmodul 4 verspannt. Insbesondere sitzt das Kontaktelement 28 federnd elastisch verspannt mit seinen Kontakten 30 in den jeweils zugeordneten Aufnahmen 32.

Die Kontakte 30 des Kontaktelement 28 sind vorliegend als axialauskragenden Profile ausgeführt.

Das Lastkontaktmodul 6 ist mit einer Schraubenverbindung an dem Anschlussmodul 4 befestigt. So wird eine Zylinderkopfschraube 46 durch die Öffnung 20 in das Lastkontaktmodul 6 eingebracht, wie beispielsweise in den Figuren 3, 4 und 8 angedeutet.

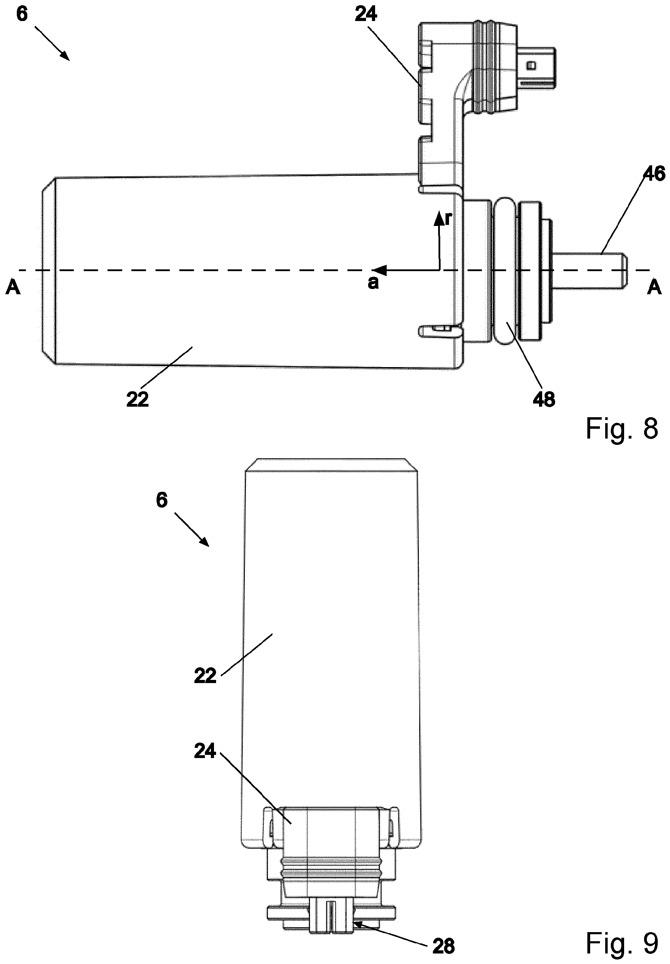

In dem Ladesteckergehäuse 8, in dem das Anschlussmodul 4 sitzt, ist vorliegend eine aktive Kühleinrichtung zur Kühlung des Ladesteckers vorgesehen, wobei der Temperatursensor 16 einen axialen Abstand zu der aktiven Kühlreinrichtung aufweist. Ein Dichtring 48 (exemplarisch in Fig. 8) dient im Bereich der Anbindung des Lastkontaktmoduls 6 an das Anschlussmodul 4 der Abdichtung des Ladesteckers gegenüber einer Umgebung.

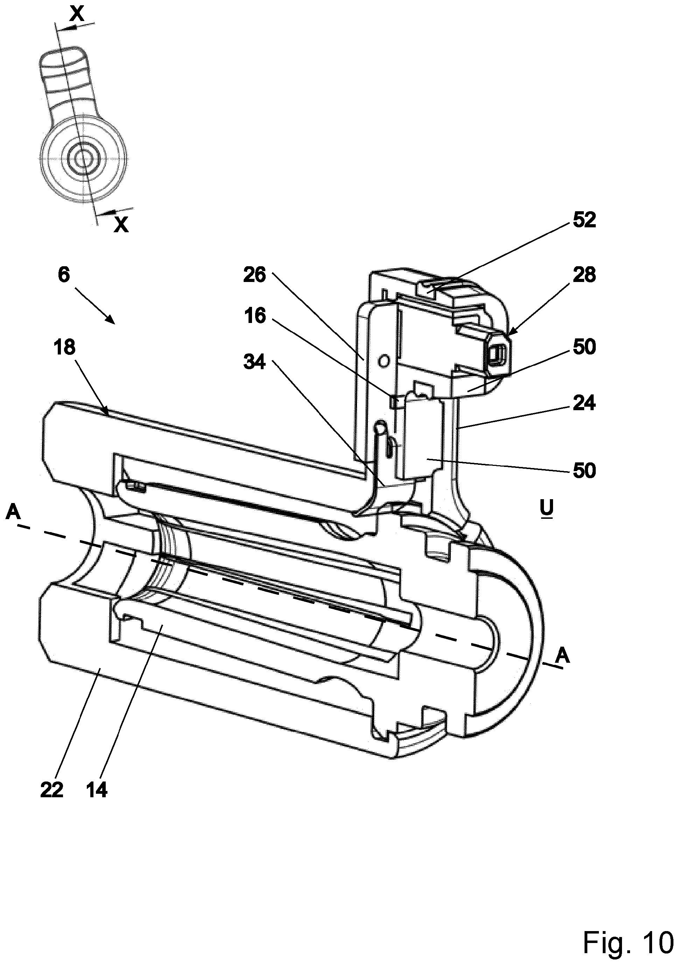

Wie dem Teilschnitt der Fig. 10 zu entnehmen ist, sind der Temperatursensor 16 und die Platine 26 vollständig von dem Gehäuse 18 und einer Vergussmasse 50 eingefasst und damit in einen Innenraum des Gehäuses 18 integriert. Hierbei ist das Gehäuse 18 von der Vergussmasse 50 verschlossen, um den Temperatursensor 16 und die Platine 26 vor Umgebungseinflüssen zu schützen.

Neben einem Dichtring 48, der in Fig. 8 gezeigt ist, kann zusätzlich ein umlaufender Dichtring 52 vorgesehen sein, um den Ladestecker 2, insbesondere einen Innenraum des Ladesteckers 2, gegenüber einer Umgebung abzudichten.

Das Lastkontaktmodul kann demnach wenigstens zwei Dichtungen 48, 52 haben, die jeweils an dem Anschlussmodul 4 anliegen, um einen Innenraum des Ladesteckers 2 gegenüber einer Umgebung U abzudichten.

### Bezugszeichen

- 2: Ladestecker
- 4: Anschlussmodul
- 6: Lastkontaktmodul
- 8: Ladesteckergehäuse
- 10: Anschlussöffnung
- 12: Griff
- 14: Lastkontakt
- 16: Temperatursensor
- 18: Gehäuse des Lastkontaktmoduls 6
- 20: Öffnung
- 22: axial erstreckten Gehäuseabschnitt 22 des Gehäuses 18
- 24: radial erstreckten Gehäuseabschnitt 24 des Gehäuses 18
- 26: Platine
- 28: Kontaktelement
- 30: Kontakt
- 32: Aufnahme
- 34: Blattfeder
- 36: Abschnitt der Blattfeder 34
- 38: Absatz des Lastkontakts 14
- 40: Abschnitt der Blattfeder 34
- 42: Haltearme der Blattfeder 34
- 44: Aufnahme der Platine 26
- 46: Zylinderkopfschraube
- 48: Dichtring
- 50: Vergussmasse
- 52: Dichtung
- a: axiale Richtung a
- A: Achse
- r: radiale Richtung
- R1: Abstand
- R2: Abstand
- U: Umgebung

## Patentansprüche

1. Ladestecker für ein Kraftfahrzeug,
- mit einem Anschlussmodul (4) und
- mit einem Lastkontaktmodul (6),
- wobei das Anschlussmodul (4) mit Versorgungsleitungen zur Leistungsversorgung verbindbar ist,
- wobei das Lastkontaktmodul (6) einen Lastkontakt (14) zur Übertragung einer Ladeleistung aufweist und
- wobei das Lastkontaktmodul (6) lösbar und austauschbar an dem Anschlussmodul (4) befestigt ist,
- wobei das Lastkontaktmodul (6) einen Temperatursensor (16) aufweist,
**dadurch gekennzeichnet, dass**
- der Lastkontakt (14) in einem axial erstreckten Gehäuseabschnitt (22) aufgenommen ist und
- der Temperatursensor (26) in einem von dem axial erstreckten Gehäuseabschnitt (22) auskragenden, radial erstreckten Gehäuseabschnitt (24) aufgenommen ist.

2. Ladestecker nach Anspruch 1,
**dadurch gekennzeichnet, dass**
- der Temperatursensor (16) zumindest abschnittsweise von einem Gehäuse (18) des Lastkontaktmoduls (6) umgeben ist.

3. Ladestecker nach einem der voranstehenden Ansprüche, **dadurch gekennzeichnet, dass**
- der Lastkontakt (14) eine Öffnung (20) zur Aufnahme eines Kontaktpins hat,
- wobei der Temperatursensor (16) einen Abstand (R2) zu der Öffnung (20) aufweist.

4. Ladestecker nach einem der voranstehenden Ansprüche, **dadurch gekennzeichnet, dass**
- der Temperatursensor (16) auf einer Platine (26) sitzt,
- wobei die Platine (26) ein Kontaktelement (28) zur Verbindung des Temperatursensors (26) mit dem Anschlussmodul (4) aufweist.

5. Ladestecker nach Anspruch 4,
**dadurch gekennzeichnet, dass**
- das Kontaktelement (28) ein Steckverbinder (28) ist, der mit einem oder mehreren Kontakten (30) in einer oder mehreren komplementär geformten Aufnahmen (32) des Anschlussmoduls (4) sitzt.

6. Ladestecker nach einem der Ansprüche 4 oder 5,
**dadurch gekennzeichnet, dass**
- das Kontaktelement (28) und/oder die Platine (26) federnd elastisch gegen das Anschlussmodul (4) verspannbar angeordnet sind.

7. Ladestecker nach einem der Ansprüche 4 bis 6,
**dadurch gekennzeichnet, dass**
- die Platine (26) über eine Blattfeder (34) mit dem Lastkontakt (14) verbunden ist.

8. Ladestecker nach einem der Ansprüche 4 bis 7,
**dadurch gekennzeichnet, dass**
- das Kontaktelement (28) zwei Kontakte (30) hat, die als axial auskragende Profile ausgeführt sind.

9. Ladestecker nach einem der voranstehenden Ansprüche, **dadurch gekennzeichnet, dass**
- das Lastkontaktmodul (6), insbesondere der Lastkontakt (14), mit einer Schraubenverbindung an dem Anschlussmodul befestigt (4) ist
und/oder
- in einem Ladesteckergehäuse (8), in dem das Anschlussmodul (4) sitzt, eine aktive Kühleinrichtung zur Kühlung des Ladesteckers (2) vorgesehen ist, wobei der Temperatursensor (16) einen Abstand zu der aktiven Kühleinrichtung aufweist.

10. Lastkontaktmodul für einen Ladestecker nach Anspruch
- mit einem Lastkontakt (14) zur Übertragung einer Ladeleistung und einem Temperatursensor (16),
- wobei das Lastkontaktmodul (6) lösbar und austauschbar mit einem Anschlussmodul (4) des Ladesteckers (2) verbindbar ist,
**gekennzeichnet dadurch, dass**
- der Lastkontakt (14) dafür eingerichtet ist in einem axial erstreckenden Gehäuseabschnitt (22)aufgenommen zu werden und
- der Temperatursensor(26) dazu eingerichtet ist in einem von diesem axial erstreckenden Gehäuseabschnitt(22) auskragenden, radial erstreckenden Gehäuseabschnitt (24) aufgenommen zu werden.

## Claims

1. A charging plug for a motor vehicle,
- having a connection module (4) and
- having a load contact module (6),
- wherein the connection module (4) is connectable to supply lines for supplying power,
- wherein the load contact module (6) has a load contact (14) for transmitting charging power, and
- wherein the load contact module (6) is detachably and replaceably secured to the connection module (4),
- wherein the load contact module (6) has a temperature sensor (16)
**characterized in that**
- the load contact (14) is accommodated in an axially extended housing section (22) and
- the temperature sensor (26) is accommodated in a radially extended housing section (24) that protrudes from the axially extended housing section (22).

2. The charging plug according to Claim 1,
**characterized in that**
- the temperature sensor (16) is enclosed, at least in sections, by a housing (18) of the load contact module (6).

3. The charging plug according to one of the preceding claims, **characterized in that**
- the load contact (14) has an opening (20) for receiving a contact pin,
- wherein the temperature sensor (16) is situated at a distance (R2) from the opening (20).

4. The charging plug according to one of the preceding claims, **characterized in that**
- the temperature sensor (16) rests on a circuit board (26),
- wherein the circuit board (26) has a contact element (28) for connecting the temperature sensor (26) to the connection module (4).

5. The charging plug according to Claim 4,
**characterized in that**
- the contact element (28) is a plug-in connector (28), which with one or more contacts (30) rests in one or more complementarily shaped receptacles (32) of the connection module (4).

6. The charging plug according to one of Claims 4 or 5, **characterized in that**
- the contact element (28) and/or the circuit board (26) are/is braceably situated against the connection module (4) in an elastic manner.

7. The charging plug according to one of Claims 4 to 6, **characterized in that**
- the circuit board (26) is connected to the load contact (14) via a leaf spring (34).

8. The charging plug according to one of Claims 4 to 7, **characterized in that**
- the contact element (28) has two contacts (30) that are designed as axially protruding profiles.

9. The charging plug according to one of the preceding claims, **characterized in that**
- the load contact module (6), in particular the load contact (14), is secured to the connection module (4) via a screw connection
and/or
- an active cooling device for cooling the charging plug (2) is provided in a charging plug housing (8) in which the connection module (4) rests, the temperature sensor (16) being situated at a distance from the active cooling device.

10. A load contact module for a charging plug according to claim 1,
- having a load contact (14) for transmitting charging power and a temperature sensor (16),
- wherein the load contact module (6) is detachably and replaceably connectable to a connection module (4) of the charging plug (2),
**characterized in that**
- the load contact (14) is adapted to be accommodated in an axially extended housing section (22) and
- the temperature sensor (26) is adapted to be accommodated in a radially extended housing section (24) that protrudes from the axially extended housing section (22).

## Revendications

1. Connecteur de charge pour véhicule automobile,
- comportant un module de connexion (4) et
- comportant un module de contact de charge (6),
- dans lequel le module de connexion (4) peut être relié à des lignes d'alimentation pour permettre une alimentation en énergie,
- dans lequel le module de contact de charge (6) présente un contact de charge (14) permettant de transmettre une puissance de charge et
- dans lequel le module de contact de charge (6) est fixé de manière amovible et interchangeable au module de connexion (4),
- dans lequel le module de contact de charge (6) présente un capteur de température (16), **caractérisé en ce que**
- le contact de charge (14) est logé dans une section de boîtier s'étendant axialement (22) et
- le capteur de température (26) est logé dans une section de boîtier s'étendant radialement (24) et faisant saillie depuis la section de boîtier s'étendant axialement (22).

2. Connecteur de charge selon la revendication 1, **caractérisé en ce que**
- le capteur de température (16) est entouré, au moins dans certaines parties, par un boîtier (18) du module de contact de charge (6).

3. Connecteur de charge selon l'une des revendications précédentes, **caractérisé en ce que**
- le contact de charge (14) présente une ouverture (20) permettant de recevoir une broche de contact,
- dans lequel le capteur de température (16) présente une distance (R2) par rapport à l'ouverture (20).

4. Connecteur de charge selon l'une des revendications précédentes, **caractérisé en ce que**
- le capteur de température (16) se situe sur une carte de circuit imprimé (26),
- dans lequel la carte de circuit imprimé (26) présente un élément de contact (28) permettant de relier le capteur de température (26) au module de connexion (4).

5. Connecteur de charge selon la revendication 4, **caractérisé en ce que**
- l'élément de contact (28) est un connecteur enfichable (28) qui se situe avec un ou plusieurs contacts (30) dans un ou plusieurs réceptacles de forme complémentaire (32) du module de connexion (4).

6. Connecteur de charge selon l'une des revendications 4 ou 5, **caractérisé en ce que**
- l'élément de contact (28) et/ou la carte de circuit imprimé (26) sont disposés de façon à pouvoir être serrés de manière élastique contre le module de connexion (4).

7. Connecteur de charge selon l'une des revendications 4 à 6, **caractérisé en ce que**
- la carte de circuit imprimé (26) est reliée au contact de charge (14) par l'intermédiaire d'un ressort à lames (34).

8. Connecteur de charge selon l'une des revendications 4 à 7, **caractérisé en ce que**
- l'élément de contact (28) possède deux contacts (30) qui sont conçus sous forme de profils en saillie axialement.

9. Connecteur de charge selon l'une des revendications précédentes, **caractérisé en ce que**
- le module de contact de charge (6), en particulier le contact de charge (14), est fixé au module de connexion (4) au moyen d'une liaison vissée
et/ou
- un dispositif de refroidissement actif permettant de refroidir le connecteur de charge (2) est prévu dans un boîtier de connecteur de charge (8) dans lequel se situe le module de connexion (4), dans lequel le capteur de température (16) présente une distance par rapport au dispositif de refroidissement actif.

10. Module de contact de charge pour un connecteur de charge selon la revendication 1,
- comportant un contact de charge (14) permettant de transmettre une puissance de charge et un capteur de température (16),
- dans lequel le module de contact de charge (6) peut être relié de manière amovible et interchangeable à un module de connexion (4) du connecteur de charge (2), **caractérisé en ce que**
- le contact de charge (14) est conçu pour être logé dans une section de boîtier s'étendant axialement (22) et
- le capteur de température (26) est conçu pour être logé dans une section de boîtier s'étendant radialement (24) et faisant saillie depuis cette section de boîtier s'étendant axialement (22).
